# FASCICULE DE BREVET EUROPEEN

(11) **EP 0 900 361 B1**
(45) Date de publication et mention de la délivrance du brevet: **14.08.2002**
(21) Numéro de dépôt: 97924079.3
(22) Date de dépôt: 13.05.1997
(51) Int. Cl.: G01C 21/00, G01S 5/14, G01S 3/14, G01C 17/00

(54) **APPAREIL INDIVIDUEL D'ORIENTATION**
PERSÖNLICHE ORIENTIERUNGSVORRICHTUNG
PERSONAL DIRECTION FINDING APPARATUS

(30) Priorité: 14.05.1996 FR 9605980
(43) Date de publication de la demande: 10.03.1999
(73) Titulaire: ROCKWELL-COLLINS FRANCE, 31701 Blagnac (FR)
(72) Inventeur: LANCIAUX, Jacques, F-31820 Pibrac (FR)
(74) Mandataire: Bruder, Michel
(86) Numéro de dépôt international: FR9700841
(87) Numéro de publication internationale: WO9743599

(56) Documents cités:
- EP-A- 0 503 214
- FR-A- 2 731 521
- US-A- 4 774 515
- US-A- 5 334 987
- PATENT ABSTRACTS OF JAPAN vol. 95, no. 003 & JP 07 057190 A (AQUEOUS RES:KK;OTHERS: 01), 3 Mars 1995, cité dans la demande
- PATENT ABSTRACTS OF JAPAN vol. 013, no. 298 (E-784), 10 Juillet 1989 & JP 01 077296 A (AKAI ELECTRIC CO LTD), 23 Mars 1989,

## Description

La présente invention concerne un appareil individuel d'orientation permettant le repérage d'une direction à suivre pour rejoindre un lieu prédéterminé soit en ligne droite soit en suivant un cheminement prédéfini.

Pour se diriger sur terre, sur mer ou dans l'air, les individus se déplaçant soit à pied soit à bord d'un véhicule, utilisent habituellement des moyens d'orientation traditionnels tels que la boussole ou le système de navigation par satellites appelé encore système GPS. Ces moyens nécessitent la lecture fréquente de l'information délivrée pour corriger la dérive de trajectoire ou erreur de route et de ce fait, pendant chaque période de lecture, les yeux ne sont plus disponibles pour progresser, observer ou prendre des repères visuels. Dans le cas d'un piéton, la lecture de l'information exige en outre que le piéton tienne l'appareil d'orientation pour le placer devant ses yeux.

Le brevet FR-A-2 731 521 décrit un appareil personnel de goniométrie comportant un moyen de captage du rayonnement d'une source, porté par la tête de l'utilisateur, un récepteur intervenant éventuellement en tant que démodulateur, un circuit de traitement du signal de goniométrie et au moins un écouteur connecté à la sortie du circuit de traitement.

Le document "Patent abstract of Japan" Vol. 95 N°003 divulgue un dispositif de navigation vocal comportant un capteur de la position ou de l'angle de rotation d'une roue pivotante d'un véhicule et fournissant une information auditive asservie à cette orientation.

Le brevet US-A-5 334 987 divulgue un système de commande d'un avion comportant un récepteur GPS permettant de déterminer la position de l'avion, et un ordinateur produisant un plan de vol ayant l'orientation désirée pour diriger le pilote vers la zone qu'il doit atteindre.

Le brevet US-A-4 774 515 divulgue un indicateur d'attitude comportant un casque à écouteurs pour fournir à un individu une information relative à sa position dans l'espace.

Un but de la présente invention est de procurer un appareil individuel d'orientation d'un emploi commode permettant à son porteur d'être informé en permanence sur la route à suivre sans que ses yeux et ses mains aient à intervenir.

A cet effet, cet appareil individuel d'orientation permettant le repérage d'une direction à suivre pour rejoindre un lieu prédéterminé soit en ligne droite, soit en suivant un cheminement prédéfini, comportant un casque muni de deux écouteurs gauche et droit appliqués sur les oreilles de l'utilisateur de l'appareil, pour permettre une écoute binaurale de signaux sonores, un circuit générateur d'un signal d'erreur de route, c'est-à-dire représentant l'écart angulaire entre la direction à suivre pour rejoindre le lieu prédéterminé et la direction effectivement suivie par l'utilisateur de l'appareil, un générateur d'un signal électrique basse fréquence dans le spectre des fréquences audibles par l'oreille humaine et un circuit de traitement de l'écoute binaurale ayant des première et seconde entrées, connectées respectivement à la sortie du circuit générateur du signal d'erreur de route et à la sortie du générateur de signal basse fréquence, et à deux sorties connectées respectivement aux deux écouteurs, afin de produire des signaux sonores différenciés pour les oreilles gauche et droite en fonction du signal d'erreur de route et pour fournir, à l'arrêt et/ou au cours du déplacement de l'utilisateur, un signal sonore asservi perçu par l'utilisateur comme semblant provenir d'un point situé dans la direction à suivre, caractérisé en ce que le circuit générateur du signal d'erreur de route comporte un compas magnétique, porté par le casque, délivrant un signal de cap magnétique correspondant au cap magnétique de la direction suivie, un récepteur d'un système de repérage de position et de navigation délivrant à une sortie un signal de cap à suivre et un circuit de calcul de l'erreur de route ayant une première entrée connectée au compas magnétique et une seconde entrée connectée au récepteur et effectuant une soustraction entre le signal de cap à suivre et le signal de cap magnétique pour délivrer le signal d'erreur de route comme résultat de la différence, ce signal étant appliqué à la sortie du circuit générateur du signal d'erreur de route.

Le circuit générateur du signal d'erreur de route comporte, de préférence, outre le compas magnétique, un récepteur d'un système de repérage de position et de navigation, par satellites (système GPS) ou stations au sol, mais l'appareil peut aussi fonctionner, en cas de nécessité imposée par l'environnement, soit avec le récepteur seul soit encore avec le compas magnétique seul.

Si l'appareil est utilisé dans un environnement permettant la réception des signaux en provenance de satellites ou de stations au sol et l'utilisation du cap magnétique donné par le compas magnétique, l'appareil fournit alors, à l'arrêt et au cours du déplacement de l'utilisateur, un signal sonore asservi à l'orientation de sa tête et dont la source semble provenir de la direction du point, dont la longitude et la latitude sont sélectionnées dans le récepteur de repérage de position.

Si l'appareil est utilisé dans un environnement ne permettant pas la réception des signaux en provenance des satellites ou de stations au sol, par exemple si l'utilisateur de l'appareil évolue dans le milieu subaquatique (plongeur), la navigation d'un plongeur équipé de l'appareil s'effectue sur la donnée du cap magnétique à suivre. Cette donnée est sélectionnée sur l'appareil et celui-ci délivre, à l'arrêt et au cours du déplacement du plongeur, un signal sonore asservi à l'orientation de sa tête et dont la source semble provenir de la direction du cap sélectionné.

Dans le cas d'une utilisation terrestre, un compas magnétique à deux axes, analysant le champ magnétique terrestre dans le plan horizontal est suffisant. Dans le cas d'une utilisation subaquatique, un compas magnétique à trois axes peut permettre le fonctionnement de l'appareil quelle que soit la position du plongeur.

Si la donnée de cap magnétique n'est pas suffisamment fiable à cause de la présence d'objets magnétiques proches, de lignes haute tension ou de la nature du sous-sol, le récepteur de repérage de position peut être utilisé seul en prenant comme information l'erreur de route qu'il délivre. Dans ce cas, le signal sonore n'est appliqué aux écouteurs que si la vitesse de déplacement de l'utilisateur de l'appareil est suffisante pour permettre au récepteur d'effectuer ses calculs et le signal sonore n'est alors pas asservi à l'orientation de la tête de l'utilisateur de l'appareil, mais uniquement à son sens de déplacement.

Le circuit générateur du signal d'erreur de route est avantageusement équipé d'un commutateur permettant la sélection de l'un des trois modes de fonctionnement possibles de l'appareil à savoir, le mode de base avec intervention combinée du récepteur et du compas magnétique, le mode avec le récepteur seul actif et le mode avec le compas magnétique seul actif. La sélection du mode de fonctionnement peut s'effectuer manuellement ou automatiquement. Dans ce dernier cas, l'appareil peut comporter un dispositif de commutation automatique de mode, en fonction de la validité des informations issues du compas magnétique et du récepteur. L'appareil comporte alors un moyen intervenant sur le signal sonore appliqué aux écouteurs afin d'informer l'utilisateur de l'appareil du changement de mode automatique au moyen d'un signal sonore particulier identifiable.

Le récepteur GPS de l'appareil peut être intégré dans le casque ou bien il peut être constitué par un récepteur externe muni d'une sortie de données.

Les informations généralement disponibles sur les récepteurs GPS telles que distance du point sélectionné, sortie de corridor et qualités de la réception du satellite, peuvent être utilisées pour informer l'utilisateur de l'appareil par un signal ou un message sonore approprié.

Le chargement des coordonnées géographiques du point de rendez-vous ou de route peut être effectué dans le récepteur GPS soit par l'utilisateur lui-même soit par l'intermédiaire d'une transmission de données par voie radioélectrique.

L'appareil suivant la présente invention permet également d'effectuer le ralliement d'une source d'émission radioélectrique dont la direction a été acquise au cours d'une brève impulsion.

On décrira ci-après, à titre d'exemples non limitatifs, diverses formes d'exécution de la présente invention, en référence au dessin annexé sur lequel :
La figure 1 est un schéma synoptique d'un appareil individuel d'orientation suivant la présente invention.
La figure 2 est un schéma synoptique d'une variante d'exécution du circuit générateur du signal d'erreur de route.

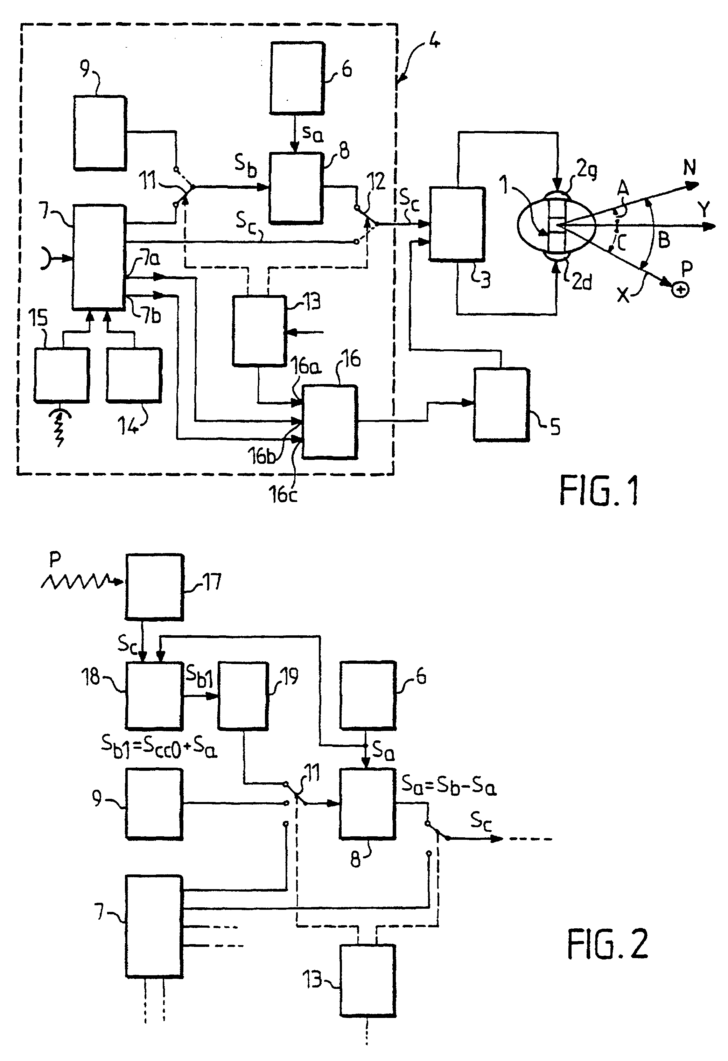

L'appareil suivant l'invention qui est représenté sur la figure 1, comprend un casque 1 porté par la tête de l'utilisateur de l'appareil et qui comporte deux écouteurs gauche 2g et droit 2d appliqués respectivement sur les deux oreilles de l'utilisateur de l'appareil, pour permettre une écoute binaurale de signaux sonores. Les deux écouteurs 2g,2d sont connectés respectivement à deux sorties d'un circuit de traitement de l'écoute binaurale 3 à deux entrées. A une première entrée du circuit de traitement 3 est connectée la sortie d'un circuit 4 comprenant tous les composants situés à l'intérieur d'un rectangle tracé en traits interrompus. Ce circuit 4 est destiné à produire un signal d'erreur de route s_{c} qui représente l'écart angulaire C entre une direction X devant être suivie par l'utilisateur pour atteindre un point de rendez-vous P et la direction Y effectivement suivie par l'utilisateur. La direction Y suivie par l'utilisateur est caractérisée par son cap magnétique A, c'est-à-dire l'angle que forme cette direction Y avec la direction N du Nord magnétique. La direction à suivre X vers le point de rendez-vous P est, elle, caractérisée par le relèvement du point de rendez-vous, c'est-à-dire l'angle B que forme la direction X avec la direction N du Nord magnétique.

L'appareil comporte également un générateur d'un signal électrique basse fréquence 5 qui est connecté à la seconde entrée du circuit de traitement de l'écoute binaurale 3. Ce générateur de signal basse fréquence émet un signal dans le spectre des fréquences audibles par l'oreille humaine.

Dans le circuit 3 de traitement de l'écoute binaurale, le signal basse fréquence du générateur 5 est modifié, en fonction de la valeur du signal d'erreur de route s_{c}, de manière à produire aux deux sorties du circuit de traitement 3 des signaux différenciés, en ce qui concerne leur amplitude, leur phase, la réponse en fréquence, qui se traduisent, dans les écouteurs 2g et 2d, par des signaux sonores différenciés appliqués aux oreilles droite et gauche. La synthèse des signaux sonores différenciés se traduit, pour l'utilisateur de l'appareil, par une perception auditive comme si le point de rendez-vous P constituait la source sonore des signaux. L'utilisateur de l'appareil peut donc s'orienter en permanence, quelle que soit la nature du terrain ou du milieu dans lequel il évolue, vers le point de rendez-vous P, grâce à son guidage automatique vers la source d'émission sonore "fictive" P.

On décrira maintenant, d'une façon plus détaillée, les éléments constitutifs principaux du circuit 4 générateur du signal d'erreur de route. Les deux constituants principaux du circuit 4 sont un compas magnétique 6 et un récepteur 7 d'un système de repérage de position et de navigation par satellites ou stations au sol, appelé ci-après pour simplifier récepteur GPS. Le compas magnétique 6, porté par le casque 1, délivre en permanence à sa sortie un signal Sₐ correspondant au cap magnétique A c'est-à-dire qui est fonction de l'orientation du casque 1, donc de la tête de l'utilisateur. La sortie du compas magnétique 6 est connectée à une première entrée d'un circuit de calcul de l'erreur de route 8. Ce circuit comporte une seconde entrée à laquelle est appliqué un signal de cap à suivre S_{b} représentant le cap B, c'est-à-dire l'angle de la direction X avec la direction N du Nord magnétique. Ce signal est fourni soit à partir du récepteur GPS 7 soit à partir d'un circuit d'entrée manuelle 9, circuit dans lequel l'utilisateur peut entrer lui-même les coordonnées géographiques du point de rendez-vous P pour délivrer corrélativement un signal de cap à suivre S_{b}. La sélection de la source du signal de cap à suivre S_{b} est effectuée au moyen d'un commutateur 11 branché entre les sorties du récepteur GPS 7 et du circuit d'entrée manuelle 9 et la seconde entrée du circuit de calcul 8.

Le récepteur GPS 7 délivre également, sur une autre de ses sorties, le signal d'erreur de route S_{c} qui est utilisé lorsque la donnée de cap magnétique n'est pas suffisamment fiable, comme il sera précisé plus loin. Cette sortie peut être connectée directement à la première entrée du circuit de traitement de l'écoute binaurale 3, au moyen d'un second commutateur 12 qui est branché entre, d'une part, la sortie du récepteur GPS 7 et la sortie du circuit de calcul 8 et, d'autre part, la première entrée du circuit de traitement 3.

Les deux commutateurs 11 et 12 sont commandés par un sélecteur de mode de fonctionnement 13 qui est commandé manuellement par l'utilisateur ou automatiquement en fonction de la validité des informations issues du compas magnétique 6 et du récepteur GPS 7.

Si l'appareil est utilisé dans un environnement permettant la réception des signaux GPS en provenance de satellites et l'utilisation du cap magnétique A, c'est-à-dire si les informations issues du récepteur GPS 7 et du compas magnétique 6 sont valides, les commutateurs 11 et 12 sont placés chacun dans une première position, ainsi qu'il est représenté en trait plein sur la figure 1. Dans ce cas, la seconde entrée du circuit de calcul 8 est connectée, par le commutateur 11, à la sortie du récepteur GPS 7 de manière à recevoir de celui-ci le signal de cap à suivre s_{b} et sa sortie est connectée, par le commutateur 12, à la première entrée du circuit de traitement 3. Le circuit de calcul 8 est un circuit de soustraction entre les signaux S_{b} et Sₐ, de manière à délivrer le signal d'erreur de route S_{c} comme résultat de leur différence. Autrement dit, le circuit 8 effectue le calcul S_{c} = S_{b} - Sₐ. Dans ce premier mode de fonctionnement qui est le mode de fonctionnement de base et qui est généralement utilisé, l'appareil fournit, à l'arrêt et au cours du déplacement de l'utilisateur, un signal sonore qui est asservi à l'orientation de la tête et dont la source semble provenir de la direction du point P dont la longitude et la latitude sont sélectionnées dans le récepteur GPS 7.

Si l'appareil est utilisé dans un environnement ne permettant pas la réception des signaux GPS en provenance des satellites, par exemple si l'utilisateur (plongeur) évolue dans le milieu subaquatique, sa navigation peut être effectuée sur la donnée du cap à suivre B entrée manuellement par l'utilisateur dans le circuit 9. Dans ce cas, le commutateur 11 est placé dans sa seconde position de manière à connecter la sortie du circuit d'entrée manuelle 9 à la seconde entrée du circuit de calcul 8. Là encore, dans ce second mode de fonctionnement, avec l'utilisation du compas magnétique 6 seul, l'appareil délivre, à l'arrêt et au cours du déplacement, un signal sonore asservi à l'orientation de la tête et dont la source semble provenir de la direction X du cap sélectionné B.

Si la donnée de cap magnétique A n'est pas suffisamment fiable, l'appareil peut être utilisé, dans un troisième mode de fonctionnement, en utilisant uniquement le récepteur GPS 7. Dans ce cas, le commutateur 12 est placé dans sa seconde position dans laquelle il connecte la sortie du récepteur GPS 7 délivrant le signal d'erreur de route S_{c} directement à la première entrée du circuit de traitement 3. Dans ce cas, le signal sonore n'est pas appliqué aux écouteurs 2g,2d si la vitesse de déplacement de l'utilisateur est trop faible pour permettre au récepteur GPS 7 d'effectuer ses calculs et l'information n'est pas asservie à l'orientation de la tête mais uniquement au sens de déplacement de l'utilisateur.

Le circuit 4 générateur du signal d'erreur de route s_{c} comporte plusieurs autres éléments fonctionnels. Au récepteur GPS 7 sont connectés un circuit 14 permettant l'entrée manuelle, dans le récepteur GPS 7, des coordonnées géographiques du point de route ou de rendez-vous P, et un récepteur radioélectrique 15 permettant un téléchargement des coordonnées géographiques du point de route par l'intermédiaire d'une transmission de données par voie radioélectrique.

Le circuit 4 peut comporter également une logique de contrôle 16 à plusieurs entrées et dont la sortie est connectée au générateur de signal basse fréquence 5. Une première entrée 16a de la logique de contrôle 16 est connectée au sélecteur de mode 13 de manière à provoquer, lors d'un changement de mode de fonctionnement automatique, l'émission, par le générateur de signal basse fréquence 5, d'un signal caractérisant le changement de mode. Une seconde entrée 16b de la logique de contrôle 16 est connectée à une sortie 7a du récepteur 7 émettant un signal caractérisant l'état présent du récepteur GPS 7. Une troisième entrée 16c de la logique de contrôle 16 est connectée à une seconde sortie 7b du récepteur GPS 7 délivrant un signal représentant la distance du point de rendez-vous P. Les signaux appliqués aux entrées 16b et 16c de la logique de contrôle 16 sont utilisés pour commander le générateur de signal basse fréquence 5 de manière que celui-ci émette différents types de sons et/ou messages en fonction des états du récepteur GPS 7, par exemple suivant que l'utilisateur se trouve dans un corridor prédéterminé ou en dehors de ce corridor, et de la distance du point de rendez-vous P sélectionné.

La figure 2 représente une variante d'exécution permettant d'effectuer le ralliement d'un point P constitué par une source d'émission radioélectrique émettant périodiquement un bref signal suivi d'une longue période de silence. Dans ce cas, un radiocompas 17, porté par la tête de l'utilisateur, permet de détecter, à l'instant t0, le bref signal radioélectrique émis par la source P et de déterminer la direction de la source P par rapport à l'orientation de la tête, cette direction étant caractérisée par le signal S_{cto} émis par le radiocompas 17. Simultanément, le compas magnétique 6 fournit une indication du cap magnétique Sₐ de l'orientation de la tête Y à l'instant t0. Un circuit de calcul 18 établit le relèvement S_{b1} de la source P à l'instant tₒ, en effectuant l'addition S_{b1} = S_{cto} + Sₐ. La sortie du circuit 18 est connectée à une mémoire 19 qui stocke la valeur S_{b1}. Après le stockage de cette information initiale, l'utilisateur peut continuer à s'orienter vers la source P, bien que celle-ci ait cessé son émission. A cet effet, le signal S_{b} en sortie de la mémoire 19 est dirigé par le commutateur 11, placé alors dans une troisième position, vers la seconde entrée du circuit 8 de calcul de l'erreur de route. Le circuit 8 effectue alors le calcul de l'erreur de route S_{c} par l'opération suivante : S_{c} = S_{b} - Sₐ. La valeur du signal d'erreur de route correspondant est appliquée au circuit de traitement 3 pour permettre à l'utilisateur de continuer à se diriger en direction de la source P, bien que celle-ci soit silencieuse.

L'appareil individuel d'orientation suivant la présente invention peut être utilisé de diverses façons. Par exemple, l'utilisateur peut désirer pouvoir progresser dans un couloir déterminé. Dans ce cas, l'utilisateur, après entrée des coordonnées géographiques du point de route à atteindre au moyen du circuit 14 ou 15, place le récepteur GPS 7 dans le mode "corridor". L'appareil lui permet alors de progresser dans un couloir de largeur définie en suivant le guidage sonore.

Dans le cas d'une progression au milieu hostile, les mains et les yeux de l'utilisateur sont disponibles à 100% pour assurer la sécurité de la progression et afin de conserver la disponibilité de l'ouïe, le mode "alerte corridor" du récepteur GPS 7 est enclenché. Les signaux sonores ne sont alors appliqués par les écouteurs 2d,2g qu'en cas d'écart excessif par rapport à la route idéale.

L'appareil permet aussi, comme il a été déjà indiqué, le ralliement d'un correspondant par voie radioélectrique. Les coordonnées géographiques du correspondant sont transmises par voie radioélectrique, ces coordonnées sont reçues dans le récepteur 15 et chargées automatiquement dans le récepteur GPS du correspondant pour permettre le ralliement.

L'utilisateur peut également se servir de l'appareil en "fil d'Ariane". Pour ce faire, il place le récepteur GPS 7 en mode d'enregistrement automatique de points et il pourra ainsi, quant il le désirera, retourner au point de départ à l'aide du guidage sonore en sélectionnant le mode "retour" sur le récepteur GPS 7.

Dans le cas d'une utilisation par un plongeur en milieu subaquatique, le plongeur pourra faire l'acquisition précise de la route à suivre, au moyen du récepteur GPS 7, en faisant surface, et il pourra poursuivre sa route en plongée en n'utilisant que l'information de cap fournie par le compas magnétique 6.

## Revendications

1. Appareil individuel d'orientation permettant le repérage d'une direction (X) a suivre pour rejoindre un lieu prédéterminé soit en ligne droite, soit en suivant un cheminement prédéfini, comportant un casque (1) muni de deux écouteurs gauche (2g) et droit (2d) appliqués sur les oreilles de l'utilisateur de l'appareil, pour permettre une écoute binaurale de signaux sonores, un circuit (4) générateur d'un signal d'erreur de route (s_{c}), c'est-à-dire représentant l'écart angulaire (C) entre la direction (X) à suivre pour rejoindre ledit lieu prédéterminé et la direction effectivement suivie (Y) par l'utilisateur de l'appareil, un générateur d'un signal électrique basse fréquence (5) dans le spectre des fréquences audibles par l'oreille humaine et un circuit (3) de traitement de l'écoute binaurale ayant des première et seconde entrées, connectées respectivement à la sortie du circuit (4) générateur du signal d'erreur de route et à la sortie du générateur de signal basse fréquence (5), et à deux sorties connectées respectivement aux deux écouteurs (2g,2d), afin de produire des signaux sonores différenciés pour les oreilles gauche et droite en fonction du signal d'erreur de route (s_{c}) et pour fournir, à l'arrêt et/ou au cours du déplacement de l'utilisateur, un signal sonore asservi perçu par l'utilisateur comme semblant provenir d'un point situé dans la direction à suivre (X), **caractérisé en ce que** le circuit (4) générateur du signal d'erreur de route (s_{c}) comporte un compas magnétique (6), porté par le casque (1), délivrant un signal de cap magnétique (Sₐ) correspondant au cap magnétique (A) de la direction suivie (Y), un récepteur d'un système de repérage de position et de navigation (7) délivrant à une sortie un signal de cap à suivre (S_{b}) représentant le cap de la direction (X) à suivre pour rejoindre ledit lieu prédéterminé et un circuit (8) de calcul de l'erreur de route ayant une première entrée connectée au compas magnétique (6) et une seconde entrée connectée au récepteur (7) et effectuant une soustraction entre le signal de cap à suivre (S_{b}) et le signal de cap magnétique (Sₐ) pour délivrer le signal d'erreur de route (S_{c}) comme résultat de la différence, ce signal étant appliqué à la sortie du circuit (4) générateur du signal d'erreur de route.

2. Appareil suivant la revendication 1 **caractérisé en ce qu'**il comporte en outre un circuit d'entrée manuelle (9) permettant d'entrer les coordonnées géographiques d'un point de rendez-vous (P) pour délivrer corrélativement un signal de cap à suivre (S_{b}) et un premier commutateur (11) branché entre les sorties du récepteur (7) et du circuit d'entrée manuelle (9) et la seconde entrée du circuit de calcul (8) à laquelle est appliqué le signal de cap à suivre (S_{b}).

3. Appareil suivant la revendication 2 **caractérisé en ce qu'**il comporte un second commutateur (12) branché entre, d'une part, une sortie du récepteur (7) délivrant directement le signal d'erreur de route (S_{c}) et la sortie du circuit (8) de calcul de l'erreur de route et, d'autre part, la première entrée du circuit de traitement (3).

4. Appareil suivant la revendication 3 **caractérisé en ce que** le circuit (4) générateur du signal d'erreur de route (S_{c}) comporte un sélecteur de mode de fonctionnement (13) commandant les premier et second commutateurs (11,12) et qui est commandé manuellement ou automatiquement en fonction de la validité des informations issues du compas magnétique (6) et du récepteur (7).

5. Appareil suivant l'une des revendications précédentes **caractérisé en ce qu'**au récepteur (7) est connecté un circuit (14) permettant l'entrée manuelle, dans ce récepteur, des coordonnées géographiques du point de route ou de rendez-vous (P).

6. Appareil suivant l'une des revendications précédentes **caractérisé en ce qu'**au récepteur (7) est connecté un récepteur radioélectrique (15) permettant un téléchargement des coordonnées géographiques du point de route par l'intermédiaire d'une transmission de données par voie radioélectrique.

7. Appareil suivant l'une des revendications 4 à 6 **caractérisé en ce que** le circuit (4) générateur du signal d'erreur de route comporte une logique de contrôle (16) à plusieurs entrées (16a,16b,16c) connectées au sélecteur de mode de fonctionnement (13) et au récepteur (7) et dont la sortie est connectée au générateur de signal basse fréquence (5) de manière que ce générateur (5) émette différents types de signaux caractéristiques en fonction de signaux émis par le récepteur (7) et lors d'un changement de mode de fonctionnement.

8. Appareil suivant la revendication 7 **caractérisé en ce qu'**une première entrée (16a) de la logique de contrôle (16) est connectée au sélecteur de mode (13) de manière à provoquer, lors d'un changement de mode de fonctionnement automatique, l'émission, par le générateur de signal basse fréquence (5), d'un signal caractérisant le changement de mode, une seconde entrée (16b) de la logique de contrôle (16) est connectée à une sortie (7a) du récepteur (7) émettant un signal caractérisant l'état présent du récepteur (7) et une troisième entrée (16c) de la logique de contrôle (16) est connectée à une seconde sortie (7b) du récepteur (7) délivrant un signal représentant la distance du point de rendez-vous (P).

9. Appareil suivant l'une quelconque des revendications précédentes, permettant d'effectuer le ralliement d'un point (P) constitué par une source d'émission radioélectrique émettant périodiquement un bref signal suivi d'une longue période de silence, **caractérisé en ce qu'**il comprend en outre un radiocompas (17) porté par la tête de l'utilisateur, permettant de détecter le bref signal radioélectrique émis, à un instant déterminé (t0), par la source (P) et de fournir un premier signal (S_{ct0}) caractérisant la direction de la source (P) par rapport à l'orientation de la tête, un second élément de calcul (18) pour établir le relèvement (S_{b1}) de la source (P) à l'instant (t₀) en effectuant l'addition du premier signal (S_{ct0}) et du signal de cap magnétique (Sₐ) de l'orientation de la tête à l'instant (t₀), une mémoire (19) connectée à la sortie du second élément de calcul (18) pour stocker le relèvement (S_{b}) de la source (P) à l'instant (t₀), la sortie de la mémoire (19) étant connectée à la seconde entrée du circuit (8) de calcul de l'erreur de route qui délivre le signal d'erreur de route (S_{c}).

## Patentansprüche

1. Selbständiges Gerät zur Orientierung, welches das Anpeilen einer Richtung (X) erlaubt, die zu verfolgen ist, um entweder in gerader Linie oder auf einem vorbestimmten Weg an einen vorbestimmten Ort zu gelangen, aufweisend: einen Helm (1), der mit zwei linken (2g) und rechten (2d) Hörern ausgerüstet ist, die ein Benutzer des Gerätes auf seine Ohren aufsetzt, um ein Hören der Tonsignale mit beiden Ohren zu ermöglichen, eine Schaltung (4) zur Erzeugung eines Kursfehlersignals (S_{c}), welches die Winkelabweichung (C) zwischen der Richtung (X), die zum Erreichen des vorbestimmten Ortes verfolgt werden muss, und der tatsächlich vom Benutzer des Gerätes verfolgten Richtung (Y) darstellt, eine Schaltung (5) zur Erzeugung eines niederfrequenten elektrischen Signals innerhalb des vom menschlichen Ohr hörbaren Frequenzspektrums, und eine Schaltung (3) zur Verarbeitung für ein Hören mit beiden Ohren, die erste und zweite Eingänge aufweist, die mit dem Ausgang der Schaltung (4) zur Erzeugung des Kursfehlersignals bzw. dem Ausgang der Schaltung (5) zur Erzeugung des niederfrequenten Signals verbunden sind, und die zwei Ausgänge aufweist, die jeweils mit den zwei Hörern (2g, 2d) verbunden sind, um Tonsignale zu erzeugen, die sich für das linke und das rechte Ohr in Abhängigkeit von dem Kursfehlersignal (S_{c}) unterscheiden, und um bei einem Halt und/oder während der Bewegung des Benutzers ein gesteuertes Tonsignal zu liefern, das vom Benutzer so wahrgenommen wird als ob es von einem Punkt käme, welcher sich in der zu verfolgenden Richtung (X) befindet, **dadurch gekennzeichnet, dass** die Schaltung (4) zur Erzeugung eines Kursfehlersignals (S_{c}) aufweist: einen Magnetkompass (6), der durch den Helm (1) gehaltert ist und ein Magnetkurssignal (Sₐ) liefert, welches dem magnetischen Kurs (A) der verfolgten Richtung (Y) entspricht, einen Empfänger eines Positionsortungs- und Navigationssystems (7), der an einem Ausgang ein Signal des zu verfolgenden Kurses (S_{b}) liefert, das den Kurs der Richtung (X) repräsentiert, die zu verfolgen ist, um an den vorbestimmten Ort zu gelangen, und eine Schaltung (8) zur Berechnung des Kursfehlers, die einen ersten Eingang, der mit dem Magnetkompass (6) ver-Dunden ist, hat, und einen zweiten Eingang besitzt, der mit dem Empfänger (7) verbunden ist, und die eine Differenzbildung zwischen dem Signal des zu verfolgenden Kurses (S_{b}) und dem Magnetkurssignal (Sₐ) durchführt, um das Kursfehlersignal (S_{c}) als Ergebnis der Differenz zu liefern, wobei das Signal an den Ausgang der Schaltung (4) zur Erzeugung des Kursfehlersignals angelegt ist.

2. Gerät nach Anspruch 1, **dadurch gekennzeichnet, dass** es außerdem eine Schaltung zur manuellen Eingabe (9), die erlaubt, die geografischen Koordinaten eines Treffpunktes (P) einzugeben, um korrelativ ein Signal des zu verfolgenden Kurses (S_{b}) zu liefern, und einen ersten Umschalter (11) aufweist, der zwischen die Ausgänge von Empfänger (7) und manueller Eingabeschaltung (9) und den zweiten Eingang der Berechnungsschaltung (8) geschaltet ist, an dem das Signal des zu verfolgenden Kurses (S_{b}) anliegt.

3. Gerät nach Anspruch 2, **dadurch gekennzeichnet, dass** es weiter einen zweiten Umschalter (12) aufweist, dessen eine Seite mit dem Ausgang des Empfängers (7), der direkt das Kursfehlersignal (S_{c}) liefert, und dem Ausgang der Schaltung (8) zur Berechnung des Kursfehlers verbunden ist, und dessen andere Seite mit dem ersten Eingang der Verarbeitungsschaltung (3) verbunden ist.

4. Gerät nach Anspruch 3, **dadurch gekennzeichnet, dass** die Schaltung (4) zur Erzeugung des Kursfehlersignals (S_{c}) eine Funktionsmodus-Wähleinrichtung (13) aufweist, die den ersten und den zweiten Umschalter (11, 12) steuert und die in Abhängigkeit von der Gültigkeit der von Magnetkompass (6) und Empfänger (7) ausgegebenen Informationen manuell oder automatisch gesteuert wird.

5. Gerät nach einem der vorstehenden Ansprüche, **dadurch gekennzeichnet, dass** mit dem Empfänger (7) eine Schaltung (14) verbunden ist, welche eine manuelle Eingabe der geografischen Koordinaten des Kurs- oder Treffpunktes (P) in diesen Empfänger erlaubt.

6. Gerät nach einem der vorstehenden Ansprüche, **dadurch gekennzeichnet, dass** mit dem Empfänger (7) ein radioelektrischer Empfänger (15) verbunden ist, der ein Fernladen der geografischen Koordinaten des Kurspunktes mittels Datenübertragung per Funk erlaubt.

7. Gerät nach einem der Ansprüche 4 bis 6, **dadurch gekennzeichnet, dass** die Schaltung (4) zur Erzeugung des Kursfehlersignals eine Steuerlogikschaltung (16) aufweist, deren mehrere Eingänge (16a, 16b, 16c) mit der Funktionsmodus-Wähleinrichtung (13) und dem Empfänger (7) verbunden sind und deren Ausgang mit der Niederfrequenzsignal-Erzeugerschaltung (5) verbunden ist, derart, dass diese Erzeugerschaltung (5) in Abhängigkeit von den vom Empfänger (7) emittierten Signalen während eines Funktionsmoduswechseis verschiedene charakteristische Signaltypen emittiert.

8. Gerät nach Anspruch 7, **dadurch gekennzeichnet, dass** ein erster Eingang (16a) der Steuerlogikschaltung (16) mit einer Moduswähleinrichtung (13) derart verbunden ist, dass bei einer Änderung des automatischen Funktionsmodus von der Niederfrequenzsignal-Erzeugerschaltung (5) ein den Moduswechsel kennzeichnendes Signal ausgegeben wird, ein zweiter Eingang (16b) der Steuerlogikschaltung (16) mit einem Ausgang (7a) des Empfängers (7) verbunden ist, der ein Signal ausgibt, das den momentanen Zustand des Empfängers (7) charakterisiert, und ein dritter Eingang (16c) der Steuerlogikschaltung (16) mit einem zweiten Ausgang (7b) des Empfängers (7) verbunden ist, der ein Signal ausgibt, dass den Abstand des Treffpunktes (P) repräsentiert.

9. Gerät nach einem der vorstehenden Ansprüche, welches das Anpeilen eines Punktes (P) erlaubt, der durch eine Radiowellenquelle gebildet wird, die periodisch ein kurzes Signal gefolgt von einem langen Zeitraum der Ruhe emittiert, **dadurch gekennzeichnet, dass** es außerdem beinhaltet:
- einen Radiokompass (17), der am Kopf des Benutzers gehaltert ist und erlaubt, das kurze Radiowellensignal zu erfassen, das zu einem festgelegten Zeitpunkt (t₀) von der Quelle (P) emittiert wird, und ein erstes Signal (S_{ct0}) liefert, welches die Richtung der Quelle P bezüglich der Orientierung des Kopfes charakterisiert, ein zweites Berechnungselement (18), um eine Peilung (S_{b1}) der Quelle P zum Zeitpunkt (t₀) dadurch vorzunehmen, dass das erste Signal (S_{ct0}) und das magnetische Kurssignal (Sₐ) der Orientierung des Kopfes zum Zeitpunkt (t₀) addiert werden,
- und einen Speicher (19), der mit dem Ausgang des zweiten Berechnungselementes (18) verbunden ist, um die Peilung (S_{b}) der Quelle (P) zum Zeitpunkt (t₀) zu speichern, wobei der Ausgang des Speichers (19) mit dem zweiten Eingang der Kursfehler-Berechnungsschaltung (8) verbunden ist, die das Kursfehlersignal (S_{c}) liefert.

## Claims

1. Personal direction finding apparatus allowing the finding of a direction (X) to be followed in order to join a predetermined place either in a straight line or by following a predefined path, comprising a headset (1) provided with two left (2g) and right (2d) ear-phones, applied on the ears of the user of the apparatus, to allow binaural listening of sound signals, a circuit (4) generating a route error signal (s_{c}), i.e. representing the angular difference (C) between the direction (X) to be followed in order to join said predetermined place and the direction (Y) effectively followed by the user of the apparatus, a generator (5) of a low-frequency electric signal in the spectrum of the frequencies audible by the human ear and a binaural listening processing circuit (3) having first and second inputs, respectively connected to the output of the route error signal generator circuit (4) and to the output of the low-frequency signal generator (5), and to two outputs respectively connected to the two earphones (2g, 2d), in order to produce different sound signals for the left and right ears as a function of the route error signal (s_{c}) and to supply, when the user stops and/or in the course of his/her displacement, a servo-controlled sound signal perceived by the user as seeming to come from a point located in the direction (X) to be followed, **characterized in that** the circuit (4) generating the route error signal (s_{c}) comprises a magnetic compass (6), borne by the headset (1), delivering a magnetic course signal (Sₐ) corresponding to the magnetic course (A) of the direction followed (Y), a receiver of a position and navigation finding system (7) delivering at an output a signal (S_{b}) of course to be followed, representing the course of the direction (X) to be followed in order to join said predetermined place, and a circuit (8) for calculating the route error having a first input connected to the magnetic compass (6) and a second input connected to the receiver (7) and effecting a subtraction between the signal (S_{b}) of course to be followed and the magnetic course signal (Sₐ) in order to deliver the route error signal (S_{c}) as result of the difference, this signal being applied to the output of the circuit (4) generating the route error signal.

2. Apparatus according to Claim 1, **characterized in that** it further comprises a manual input circuit (9) making it possible to enter the geographical coordinates of a rendez-vous point (P) in order correlatively to deliver a signal (S_{b}) of the course to be followed, and a first switch (11) connected between the outputs of the receiver (7) and of the manual input circuit (9) and the second input of the calculating circuit (8) to which the signal (S_{b}) of the course to be followed is applied.

3. Apparatus according to Claim 2, **characterized in that** it comprises a second switch (12) connected between, on the one hand, an output of the receiver (7) directly delivering the route error signal (S_{c}) and the output of the route error calculating circuit (8) and, on the other hand, the first input of the processing circuit (3).

4. Apparatus according to Claim 3, **characterized in that** the circuit (4) generating the route error signal (S_{c}) comprises an operational mode selector (13) controlling the first and second switches (11, 12) and which is controlled manually or automatically as a function of the validity of the information issuing from the magnetic compass (6) and the receiver (7).

5. Apparatus according to one of the preceding Claims, **characterized in that** there is connected to the receiver (7) a circuit (14) allowing the manual input, in this receiver, of the geographical coordinates of the route or rendez-vous point (P).

6. Apparatus according to one of the preceding Claims, **characterized in that** there is connected to the receiver (7) a radioelectric receiver (15) allowing downloading of the geographical coordinates of the route point via a radioelectric data transmission.

7. Apparatus according to one of Clams 4 to 6, **characterized in that** the route error signal generator circuit (4) comprises a control logic (16) having a plurality of inputs (16a, 16b, 16c) connected to the operational mode selector (13) and to the receiver (7) and of which the output is connected to the low frequency signal generator (5) so that this generator (5) emits different types of characteristic signals as a function of signals emitted by the receiver (7) and upon a change of operational mode.

8. Apparatus according to Claim 7, **characterized in that** a first input (16a) of the control logic (16) is connected to the mode selector (13) so as to provoke, upon an automatic operational mode change, the emission, by the low frequency signal generator (5), of a signal characterizing the change of mode, a second input (16b) of the control logic (16) is connected to an output (7a) of the receiver (7) emitting a signal characterizing the present state of the receiver (7), and a third input (16c) of the control logic (16) is connected to a second output (7b) of the receiver (7) delivering a signal representing the distance from the rendez-vous point (P).

9. Apparatus according to any one of the preceding Claims, making it possible to join a point (P) constituted by a radioelectric emission source periodically emitting a brief signal followed by a long period of silence, **characterized in that** it further comprises a radio compass (17) worn on the user's head, making it possible to detect the brief radioelectric signal emitted, at a determined instant (t0), by the source (P) and to furnish a first signal (S_{ct0}) characterizing the direction of the source (P) with respect to the orientation of the head, a second calculating element (18) for establishing the bearing (S_{b1}) of the source (P) at instant (t₀) by effecting the addition of the first signal (S_{ct0}) and of the magnetic course signal (Sₐ) of the orientation of the head at instant (t₀), a memory (19) connected to the output of the second calculating element (18) for storing the bearing (S_{b}) of the source (P) at instant (t₀), the output of the memory (19) being connected to the second input of the route error calculating circuit (8) which delivers the route error signal (S_{c}).
